# EUROPÄISCHE PATENTSCHRIFT

(11) **EP 1 307 682 B1**
(45) Veröffentlichungstag und Bekanntmachung des Hinweises auf die Patenterteilung: **25.06.2008**
(21) Anmeldenummer: 00985153.6
(22) Anmeldetag: 09.12.2000
(51) Int. Cl.: F16N 19/00

(54) **ÖLBEHÄLTER UND VERFAHREN ZU SEINER HERSTELLUNG**
OIL RESERVOIR AND METHOD FOR THE PRODUCTION THEREOF
RESERVOIR A HUILE ET PROCEDE DE FABRICATION DUDIT RESERVOIR

(30) Priorität: 01.08.2000 DE 10037856
(43) Veröffentlichungstag der Anmeldung: 07.05.2003
(73) Patentinhaber: IBS Filtran Kunststoff-/Metallerzeugnisse GmbH, 51589 Morsbach (DE)
(72) Erfinder: BEER, Markus, 51597 Morsbach (DE)
(74) Vertreter: Lang, Friedrich
(86) Internationale Anmeldenummer: PCT/EP2000/012462
(87) Internationale Veröffentlichungsnummer: WO 2002/010636

(56) Entgegenhaltungen:
- EP-A- 0 936 347
- EP-A- 0 995 535
- DD-A- 123 984
- GB-A- 2 314 516
- US-A- 5 130 014
- US-A- 5 301 642
- PATENT ABSTRACTS OF JAPAN vol. 011, no. 333 (M-637), 30. Oktober 1987 (1987-10-30) & JP 62 116311 A (HONDA MOTOR CO LTD), 27. Mai 1987 (1987-05-27)

## Beschreibung

Die Erfindung betrifft einen Ölbehälter für Motoren und Getriebe, insbesondere Automatgetriebe für Kraftfahrzeuge.

Bei Kraftfahrzeugen ist es allgemein bekannt, den für die Schmierung und Kühlung des Motors erforderlichen Ölkreislauf aus einem Ölsumpf zu speisen, der sich in einer Ölwanne unter dem Motor befindet. Dabei wird das Öl von einer Ölpumpe aus der Ölwanne gesaugt und mit Druck in ein Ölkanalsystem des Motors eingespeist. Von den Schmier- und Spritzstellen tropft und rinnt das Öl in die Ölwanne zurück. Die Oberfläche der Ölwanne dient dabei zum Kühlen des Öls, bei erhöhtem Kühlungsbedarf wird vorzugsweise in die Druckseite des Ölkreislaufs ein gesonderter Ölkühler eingeschleift.
Das Umlaufvolumen des Ölkreislaufs sowie die zur ausreichenden Abkühlung erforderliche Verweilzeit des Öls in der Ölwanne bestimmen dabei das Ölvolumen.
Andererseits ist es erwünscht, das Ölvolumen so klein wie möglich zu halten, damit das Öl nach einem Kaltstart möglichst schnell seine Betriebstemperatur annimmt und die konstruktiv vorgesehenen Aufgaben übernehmen kann. Weiterhin ist es zur Verbrauchsminderung erwünscht, das Gewicht eines betriebsfähigen Motors, zu dem eben auch die Ölfüllung gehört, möglichst gering zu halten. Anforderungen der Aerodynamik erfordern zudem, die Motoren möglichst klein zu bauen, insbesondere große Ölwannen zu vermeiden. Insbesondere bei großen Ölvolumina ist ferner im Bereich der Ölwanne ein zusätzliches Bauvolumen vorzusehen, da sich das Volumen des Ölvorrats durch die Aufheizung des Öls in Folge der thermischen Ausdehnung erheblich vergrößert. Selbst bei maximaler Betriebstemperatur darf dabei der Ölspiegel in der Ölwanne nicht soweit ansteigen, daß die Gegengewichte der Kurbelwelle in den Ölvorrat eintauchen. Ein solches Eintauchen würde zu einem Aufschäumen des Öls führen und, wenn solcher Ölschaum von der Ölpumpe angesaugt wird, zu einem Zusammenbrechen des Öldrucks und nachfolgend zu einem kapitalen Motorschaden führen.

Zur Vermeidung dieser Probleme hat man insbesondere bei Hochleistungsmotoren in der Vergangenheit eine sog. Trockensumpfschmierung vorgesehen, bei der lediglich eine sehr kleine Ölwanne unter dem Motor vorgesehen ist, aus der zurückgetropftes Öl durch eine Förderpumpe in ein getrenntes Ölreservoir außerhalb des Motors gefördert wird. Die notwendige Abkühlung des Öls sowie das Vorhalten einer ausreichend großen Ölmenge sowie entsprechender Ausdehnungsraum bei Erwärmung des Öls können in einem solchen getrennten Ölreservoir technisch einfach vorgehalten werden. Ein solches Ölreservoir kann zugleich mit einem Ölkühler kombiniert sein. Aus dem Ölreservoir wird das Öl durch eine Druckpumpe in den Ölkreislauf des Motors eingespeist. Diese Lösung erlaubt eine Minimierung des Bauvolumens des Motors sowie eine nahezu optimale Auslegung des Ölkreislaufs. Nachteilig bei dieser Lösung ist jedoch der zusätzliche Bauaufwand für ein getrenntes Ölreservoir, die entsprechenden Leitungen und die zusätzliche Ölförderpumpe. Weiterhin ist die Öldruckpumpe gesondert auszuführen und kann nicht, wie sonst bei Fahrzeugen mit Naßsumpfschmierung, in den Kurbeltrieb integriert werden. Dies führt im Ergebnis zu so erheblichen Mehrkosten, daß eine Trockensumpfschmierung heute für in Großserie hergestellte Fahrzeuge nicht mehr in Frage kommt.

Die vorgenannten Probleme, die sich bei Verbrennungsmotoren ergeben, gelten sinngemäß auch für die nachgeschalteten Getriebe. Dabei ergeben sich jedoch weitere Anforderungen zur Begrenzung des Ölvolumens, da die Erwärmung des Öls auf Betriebstemperatur langsamer erfolgt, weil eine innere Wärmequelle wie durch die Verbrennung beim Motor entfällt und zudem noch stärkere Beschränkungen hinsichtlich des verfügbaren Einbauraumes bestehen.

Dies gilt insbesondere bei Automatgetrieben, bei denen systembedingt ein größerer Ölvorrat erforderlich ist. Dies liegt daran, daß bei einem Automatgetriebe der Ölvorrat nicht lediglich zur Schmierung der Lager und Zahnradpaarungen erforderlich ist, sondern das Öl zudem zur hydrodynamischen Übertragung der Motorleistung auf das Getriebe über einen hydrodynamischen Drehmomentwandler dient und zudem als Hydraulikflüssigkeit für die Steuerung des Getriebes herangezogen wird. Dabei ist insbesondere zu erwähnen der Einsatz als Hydraulikflüssigkeit zur Herstellung der kraftschlüssigen Übertragung der Lamellen- und Bandbremsen, über die die Gänge beim Automatgetriebe geschaltet werden. Da üblicherweise bei einem vollautomatischen Getriebe insbesondere zum Einsatz in Pkw oder geländegängigen Nutzfahrzeugen eine Schaltung unter Last erfolgt, d. h., ohne Unterbrechung des Kraftflusses, ist durch das Getriebeöl zudem die Verlustwärme aufzunehmen und abzuführen, die durch den Schlupf der Lamellen- und Bandbremsen durch die Drehzahldifferenz beim Schalten entsteht. Aus diesem Grund werden für solche Automatgetriebe spezielle Öle verwendet, sog. ATF-Öle (Automatic Transmission Fluid).

Zu den Eigenschaften solcher ATF-Öle gehört allerdings auch eine verhältnismäßig große Wärmeausdehnung und eine extreme Neigung zur Schaumbildung. In Zusammenhang mit den vorstehend beschriebenen Betriebsbedingungen ergibt sich nicht nur die Notwendigkeit eines besonders großen Betriebstemperaturbereiches für das ATF-Öl, sondern in Verbindung mit der relativ hohen Wärmeausdehnung die Notwendigkeit zusätzlichen Bauraumes. Dabei ist die Ölwannengestaltung so vorzunehmen, daß unter keinen Betriebsumständen der ATF-Pegel so weit steigt, daß die Zahnräder des Getriebes in den Ölvorrat eintauchen. Die laufenden Zahnräder würden dabei in kürzester Zeit zu einem so starken Aufschäumen des ATF-Öls führen, daß eine Funktion des Getriebes nicht mehr gewährleistet wäre und schwere Getriebeschäden zu erwarten sind.

Große Ölvolumina in Ölwannen bringen allerdings den Nachteil mit sich, daß Betriebsstörungen dadurch auftreten können, daß der Ölvorrat in der Ölwanne durch Fahrzeugbewegungen hin- und herschwappt und möglicherweise der Saugstutzen der Ölpumpe kurzzeitig aus dem Ölvorrat austauchen kann, was zu einem Zusammenbruch des Öldrucks mit entsprechenden Schäden führt. Hiergegen ist es aus dem Bereich des Einsatzes von Verbrennungsmotoren in Booten und Schiffen bekannt, die Ölwanne so auszugestalten, daß Trennwände gebildet werden, die den Ölwannenraum in mehrere Bereiche unterteilen, wobei die Bereiche in Strömungsverbindung zueinander stehen. Die Trennwände verhindern, daß durch Wellenbildung oder periodische Bewegungen des Antriebs eine so starke Ölverlagerung auftritt, daß die Ölpumpe freiliegt. Nachteilig bei einer solchen Lösung ist jedoch der sehr hohe Aufwand für die Herstellung der Ölwannen, der für einen Massenmarkt wie Pkws nicht zu einem konkurrenzfähigen Preisniveau führen kann. Weiterhin führen solche Zwischenwandungen bei den im allgemeinen sehr flach ausgeführten Getriebeölwannen nicht zu wesentlicher Verbesserung.

Aus EP 0 995 535 A2 und aus DE 198 60 357 A1 ist ein Laserschweißverfahren für Automatikgetriebe-Ölfilter bekannt, bei dem zwei Filterhalbschalen aus Kunststoff für Automatikgetriebe-Ölfilter aufeinandergelegt werden und über ihren gemeinsamen Rand durch Laserlicht verschweißt werden, wobei eine Filterhalbschale aus laserlichtdurchlässigem Kunststoff und die andere Filterhalbschale aus laserlichtundurchlässigem Kunststoff besteht. Dabei wird der Laserstrahl durch die laserlichtdurchlässige Filterhalbschale entlang der Berührungsstelle mit der anderen Filterhalbschale geführt. Durch die Lichtabsorption des laserlichtundurchlässigen Kunststoffmaterials erfolgt ein Miteinanderverschmelzen der beiden Filterhalbschalen im Schweißbereich. Dazu wird die Verwendung eines Neodym-YAG-Impulslaser vorgeschlagen.

Weiterhin ist beschrieben, daß die Filterhalbschalen aus einem gleichen Kunststoff bestehen sollen.

In DE 195 10 493 A1 ist beschrieben, daß aus DE-OS 36 21 030 bekannt ist, Kunststoffolien durch Einwirkung von Laserstrahlen miteinander zu verschweißen. Dazu werden die Kunststoffolien plan aufeinander gelegt. Nachfolgend wird ein fokusierter Laserstrahl auf die Folien gerichtet, wodurch die Folien in dem bestrahlten Bereich derart erwärmt werden, daß sie in einen schmelzflüssigen Zustand gelangen und miteinander verschmelzen.

Aus EP 0 159 169 A2 soll ein Verfahren zum Verschweißen von Platten aus Kunststoff mittels Laserstrahlen bekannt sein. Dabei soll der Laserstrahl durch eine erste Platte dringen, die aus einem Kunststoff ohne Additive bestehen soll, so daß die Platte für den Laserstrahl weitgehend transparent ist. Diese befindet sich auf einer zweiten Platte, die mit einem Additiv versehen ist, so daß der Laserstrahl im Kunststoff absorbiert wird. Der Laserstrahl wird durch die erste Platte auf die zweite Platte gerichtet, so daß die einander angrenzenden Kontaktflächen der beiden Platten aufschmelzen und sich bei der anschließenden Abkühlung miteinander verbinden sollen.

DE 195 10 493 A1 beschreibt hierzu als nachteilig, daß die erste Platte kein Additiv enthalten darf und in einem ungefärbten milchig-weißen Zustand vorliegt, während die zweite Platte in einem schwarzen Farbstoff eingefärbt sein kann. Die sich daraus ergebende Ungleichmäßigkeit eines auf diese Art und Weise hergestellten Bauteils wird als derartig nachteilig beschrieben, daß ein solches Verfahren nicht in Frage komme.

Dazu wird in DE 195 10 493 A1 ein Verfahren zur Herstellung von Schaltergehäusen vorgeschlagen, bei dem eine Einfärbung der beiden Kunststoffteile dahingehend erfolgen soll, daß ein erstes Werkstückteil eine Transmission im Bereich von lediglich etwa 60 % aufweisen soll, um eine möglichst gleichmäßige farbliche Erscheinung eines Schaltergehäusebauteils zu erhalten.

In DE 198 60357 A1 ist beschrieben, daß es bekannt ist, Filter zum Einbau in Automatikgetriebe dadurch herzustellen, daß Gehäusehalbschalen durch Reibschweißverfahren miteinander verbunden werden, z. B. verschiedene Vibrationsreibschweißverfahren oder Ultraschallverschweißung. Als nachteilig ist dabei bekannt, daß bei diesen Reibschweißverfahren aufgrund der Relativbewegung zwischen den Fügepartnern ein Abrieb entsteht, der als Verschmutzung an den fertigen Werkstücken anhaftet. Die entsprechende Betriebe und Automobilhersteller haben daher zahlreiche Verfahren und Vorschriften erarbeitet, nach denen solchermaßen hergestellte Bauteile während und nach der Herstellung gereinigt werden müssen, um die Restverschmutzung auf ein statistisch tolerierbares Maß zu begrenzen.

Der Erfindung liegt daher die Aufgabe zugrunde, einen Ölbehälter der eingangs erwähnten Art bereitzustellen, der zur Optimierung des Ölhaushaltes eines Verbrennungsmotors oder eines Getriebes, insbesondere eines Automatgetriebes, geeignet ist, dabei ein geringes Gewicht aufweist und derart herstellbar ist, daß Beeinträchtigungen der Zuverlässigkeit des Gesamtsystems praktisch ausgeschlossen sind.

Die Aufgabe wird erfindungsgemäß gelöst durch einen Ölbehälter gemäß Anspruch 1.

Durch einen erfindungsgemäßen Ölbehälter ist es möglich, trotz der eingangs geschilderten Problematik, insbesondere bei Automatgetrieben, ein kleines Bauvolumen, insbesondere eine kleine Ölwanne, zu erhalten, bei so geringen Material- und Herstellungskosten, daß die Kosten für einen erfindungsgemäßen Ölbehälter annähernd durch die Ersparnisse aufgrund des kleineren Getriebegehäuses und der kleineren Ölwanne kompensiert werden.

Dies ist möglich durch die Ausbildung aus Kunststoffgehäuseteilen, die z. B. im Spritzgußverfahren äußerst preisgünstig auch in komplexer Geometrie herstellbar sind, so daß der erfindungsgemäße Ölbehälter an irgendeiner Stelle im Getriebegehäuse untergebracht werden kann, wo z. B. neben Getriebewellen ein gewisser Bauraum vorhanden ist.

Durch die erfindungsgemäße Ausbildung von Einlauföffnung und Ablauföffnung kann z. B. ATF-Öl bei Überschreiten einer bestimmten Öltemperatur oder durch Herabtropfen von Schmierstellen in den erfindungsgemäßen Ölbehälter gelangen, wobei durch die Ausbildung im Ergebnis sichergestellt ist, daß der Behälter stets gefüllt ist und somit die Ölwanne um das Behältervolumen entlastet wird. Durch die Ablauföffnung ist sichergestellt, daß sich der Behälter langsam wieder entleert, z. B. bei Stillstand des Getriebes, so daß bei Inbetriebnahme das gesamte Ölvolumen für die Ölpumpen zur Verfügung steht.

Durch die mehrteilige Aufteilung ist die Erzielung hochkomplexer Geometrien möglich, die eine Anordnung des Ölbehälters auch in verwinkelten Gehäuseecken ermöglicht. Durch die erfindungsgemäße Laserverschweißung kann ein solcher Behälter besonders kostengünstig und betriebssicher hergestellt werden, da durch die Laserverschweißung eine nahezu perfekte Abdichtung zwischen den Gehäuseteilen sichergestellt werden kann, was zum Erhalt des auslegungsgemäßen Speichervolumens zweckmäßig ist. Weiterhin wird durch die Laserverschweißung das Entstehen von Abrieb bei der Herstellung verhindert, kostenaufwendige Reinigungsmaßnahmen, die insbesondere bei komplexen Geometrien stets eine Restverschmutzung bedingen, sowie die damit verbundene Qualitätssicherung können von vornherein entfallen.

Dadurch, daß während der Verarbeitung keine Abriebpartikel entstehen, die insbesondere bei Verwendung der meisten wirtschaftlich interessanten Kunststoffsorten zudem aufgrund elektrostatischer Anziehung stark an den Kunststoffteilen anhaften und somit durch Reinigungsbemühungen nicht vollständig entfernt werden können, ist auch sichergestellt, daß solcher Abrieb nicht während des Betriebs durch den Ölstrom in die empfindliche elektrohydraulische Steuerung des Automatgetriebes gelangen und dort auf die Dauer Funktionsstörungen hervorrufen. Weiterhin ist auch sichergestellt, daß solcher Abrieb nicht über den Ölkreislauf zu den Lamellen- oder Bandkupplungen eines Automatgetriebes gelangen und dort zu einer Herabsetzung der Reibwerte führen kann.

Bei Versuchen hat sich herausgestellt, daß es besonders zweckmäßig ist, wenn wenigstens eines der Kunststoffgehäuseteile aus einem unpigmentierten glasfaserverstärkten Polyamid hergestellt ist. Einerseits ist dadurch eine besonders günstige Voraussetzung für das Laserverschweißen gegeben, da ein solches Gehäusebauteil nur einen geringfügigen Teil des Laserlichtes absorbiert, so daß die Energie des Laserstrahls an der vorgesehenen Schweißnaht weitgehend zur Verfügung steht. Andererseits lassen sich so hinreichend maßhaltige und gegen ATF-Öl sowie gegen Mineralöl und die möglicherweise in Motorenöl enthaltenen Reste von Benzin oder Dieselkraftstoff beständige und maßhaltige Ölbehälter herstellen.

Für eine besonders einfache und sichere Erstellung der Schweißnaht ist es weiterhin besonders zweckmäßig, wenn wenigstens eines der Kunststoffgehäuseteile aus einem insbesondere mit Ruß pigmentierten glasfaserverstärkten Polyamid hergestellt ist. Durch die Pigmentierung mit Ruß ist sichergestellt, daß der Laserstrahl in den Randbereichen eines solchen Bauteils zu einem sehr hohen Grad absorbiert wird, so daß durch entsprechende Energieaufnahme eine schnelle und sichere Aufschmelzung des bestrahlten Bereiches sichergestellt ist.

Für eine hinreichende Beständigkeit des Ölbehälters auch bei erhöhter Betriebstemperatur bei dennoch guter Transparenz gegenüber dem Laserstrahl ist es zweckmäßig, wenn wenigstens eines der Kunststoffgehäuseteile einen Glasfaseranteil von wenigstens etwa 10 Gew.-% aufweist. Dabei ist es für die Formbeständigkeit auch bei erhöhten Temperaturen besonders zweckmäßig, wenn der Glasfaseranteil eines weiteren Kunststoffgehäuseteils wenigstens etwa 20 Gew.-%, vorzugsweise etwa 30 Gew.-% beträgt.

Für eine besonders sichere Ausbildung der Laserschweißnaht auch bei komplizierten Gehäusekonturen hat sich als zweckmäßig herausgestellt, wenn wenigstens zwei der Kunststoffgehäuseteile einen unterschiedlichen Gehalt an Verstärkungsfasern aufweisen.

Für die Formbeständigkeit des Ölbehälters auch bei überhöhten Öltemperaturen ist es vorteilhaft, wenn wenigstens eines der Kunststoffgehäuseteile ferner einen Anteil an Mineralfüllung von wenigstens etwa 15 Gew.-%, vorzugsweise etwa 20 Gew.-% aufweist.

Für den Einsatzbereich bei Automatgetrieben hat es sich als besonders zweckmäßig herausgestellt, wenn das Aufnahmevolumen des Ölbehälters wenigstens etwa 300 ml beträgt, vorzugsweise etwa 330 ml. Hierdurch ist einerseits eine hinreichende Entlastung des Ölvolumens in der Ölwanne gegeben, andererseits kann ein Ölbehälter solchen Volumens noch ohne Vergrößerung des Getriebegehäuses integriert werden.

Eine Funktion als dynamischer Ölspeicher hat sich als besonders zweckmäßig herausgestellt wenn der Ölbehälter so ausgebildet ist, daß eine vollständige Füllung des Ölbehälters mit Wasser innerhalb einer Zeit von etwa wenigstens 210 Sekunden, vorzugsweise nicht mehr als 240 Sekunden, insbesondere von etwa 220 bis 230 Sekunden aus dem Ölbehälter in seiner Betriebslage austritt.

Für eine effiziente Füllung des Ölbehälters insbesondere durch Tropföl von Schmierstellen ist es zweckmäßig, wenn die wenigstens eine Einlauföffnung in der Betriebslage des Ölbehälters von einer Auffangmulde umgeben ist.

Bei Versuchen an existierenden Automatgetrieben hat es sich als besonders zweckmäßig herausgestellt, wenn die Auffangmulde wenigstens etwa 1,6 mm tief ist, und in wenigstens zwei Richtungen von Rampen begrenzt ist, deren obere Ränder etwa 4,3 mm über der Einlauföffnung liegen, insbesondere wenn die Auffangmulde etwa 55 mm breit ist und/oder die Auffangmulde wenigstens etwa 10 % breiter ist als die zumindest eine Einlauföffnung.

Für die Verwendung eines erfindungsgemäßen Ölbehälters in einem Automatgetriebe hat es sich als besonders zweckmäßig herausgestellt, wenn der Querschnitt der wenigstens einen Einlauföffnung zumindest 170 mm² beträgt und/oder der Querschnitt der Ablauföffnung zusammen nicht mehr als 3 mm² betragen. Insgesamt haben Versuche ergeben, daß besonders effizienter Einsatz erreicht werden kann, wenn das Verhältnis der Querschnitte von Ablauföffnungen und Einlauföffnungen wenigstens 1:10 beträgt.

Um sicherzustellen, daß der erfindungsgemäße Ölbehälter erst gefüllt wird, wenn eine Erhöhung des Ölvolumens aufgrund thermischer Ausdehnung dies erfordert, ist es besonders zweckmäßig, wenn die Einlauföffnung durch einen Bimetallverschluß abgedeckt ist, der die Einlauföffnung erst bei Überschreiten einer vorbestimmten Temperatur freigibt.

Um sicherzustellen, daß der Bimetallverschluß entsprechend der tatsächlich vorhandenen Öltemperatur reagiert, ist es besonders zweckmäßig, wenn der Bimetallverschluß innerhalb der Auffangmulde angeordnet ist.

In einer besonders kostengünstig herzustellenden Ausführungsform ist der Ölbehälter mehrteilig unter Verwendung wenigstens von drei Kunststoffgehäuseteilen gebildet, die untereinander durch Laserschweißen verbunden sind, und von denen wenigstens zwei unpigmentiert oder laserlichtdurchlässig eingefärbt sind.

Für die Herstellung eines erfindungsgemäßen Ölbehälters besonders geeignet ist ein Verfahren zur Herstellung eines mehrteiligen Ölbehälters unter Verwendung von wenigstens zwei Kunststoffgehäuseteilen, wobei wenigstens ein Kunststoffgehäuseteil aus einem unpigmentierten oder laserlichtdurchlässig eingefärbten faserverstärkten Thermoplast, vorzugsweise durch Spritzgießen gebildet ist, und wenigstens ein weiteres Kunststoffgehäuseteil aus einem mit Ruß pigmentierten oder laserlichtundurchlässig eingefärbten faserverstärkten Kunststoff vorzugsweise durch Spritzgießen gebildet ist, wobei die wenigstens zwei Kunststoffgehäuseteile entlang ihrer Verbindungsfläche mit Druck zusammengefügt und der Trennbereich der wenigstens zwei Kunststoffgehäuseteile mit einem Laser bestrahlt werden, so daß der Randbereich des mit Ruß pigmentierten oder laserlichtundurchlässig eingefärbten Kunststoffgehäuseteils aufschmilzt und der Schmelze ausreichend Energie zugeführt wird, daß durch den Kontakt mit der Schmelze deren Bereich des unpigmentierten oder laserlichtdurchlässig eingefärbten Kunststoffgehäuseteils aufgeschmolzen wird und die aufgeschmolzenen Randbereiche sich zur Ausbildung einer fugenlosen Schweißnaht verbinden.

Die Erfindung soll im folgenden anhand eines in den beigefügten Zeichnungen dargestellten Ausführungsbeispiels näher erläutert werden. Es zeigen:

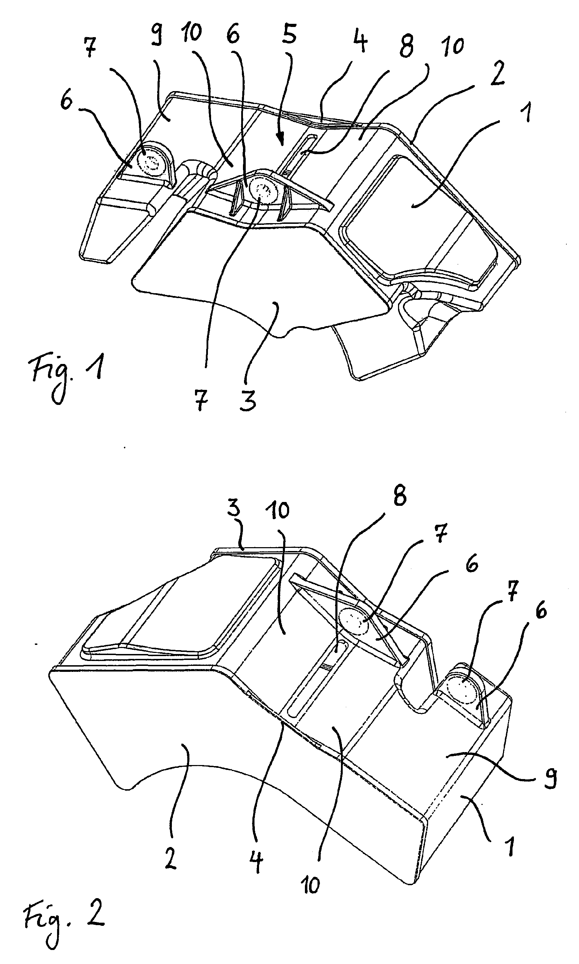

- Figur 1:: Eine perspektivische Darstellung eines erfindungsgemäßen Ölbehälters von schräg oben;
- Figur 2:: Eine weitere perspektivische Ansicht des erfindungsgemäßen Ölbehälters, ebenfalls von schräg oben;

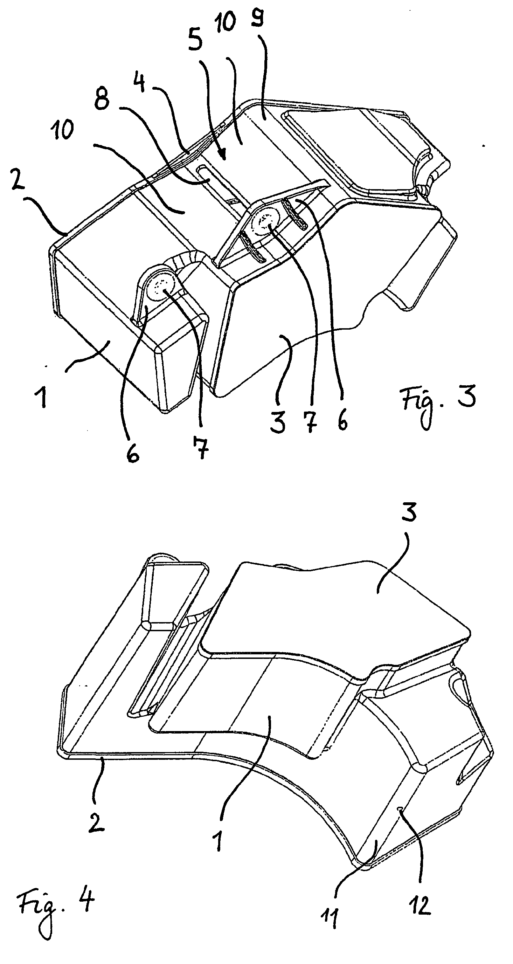

- Figur 3:: Eine weitere perspektivische Draufsicht auf den erfindungsgemäßen Ölbehälter gemäß Figuren 1 und 2; und
- Figur 4:: Eine perspektivische Untersicht des erfindungsgemäßen Ölbehälters gemäß den Figuren 1 bis 3.

Der erfindungsgemäße Ölbehälter, der in den Figuren dargestellt ist, ist insbesondere für die Verwendung in einem Automatgetriebe für einen PKW vorgesehen und dient der vorübergehenden Aufnahme eines Volumens von ATF-Öl, wobei das Fassungsvermögen des Ölbehälters etwa 330 ml beträgt. Der Ölbehälter ist mehrteilig aus Kunststoffgehäuseteilen gebildet, nämlich einem Mittelteil 1, einem großen Gehäusedeckel 2 und einem kleinen Gehäusedeckel 3. Bei dem beschriebenen Beispiel sind die Gehäusedeckel 2 und 3 durch Spritzgießen aus einem unpigmentierten thermoplastischen Kunststoff gebildet, nämlich PA 6-GF mit einem Glasfaseranteil von etwa 10 Gew.-%, vorzugsweise mit einer zusätzlichen Mineralfüllung von 20 Gew.-%. Die Deckel 2 und 3 sind im wesentlichen eben ausgebildet und weisen zweckmäßig eine nicht im einzelnen dargestellte Nut auf, die sich entlang des Randes befindet und zur Aufnahme der Gehäusekanten des Mittelteils 1 angepaßt ist.

Der große Gehäusedeckel 2 weist zusätzlich noch einen außerhalb der umlaufenden Nut angeordneten überstehenden Abschnitt 4 auf, der eine in dem Mittelteil 1 gebildete Mulde 5 des fertigen Ölbehälters abschließt.

Das Mittelteil 1 ist ebenfalls vorzugsweise durch Spritzgießen aus einem faserverstärkten thermoplastischen Kunststoff gebildet, vorzugsweise einem PA 66-GF mit einem Glasfaseranteil von 20, vorzugsweise 30 Gew.-%. Selbstverständlich können auch andere geeignete Faserverstärkungen für die Kunststoffgehäuseteile eingesetzt werden.

Weiterhin ist das Material, aus dem das Mittelteil 1 gebildet ist, zusätzlich mit einer Mineralfüllung von etwa 20 Gew.-% versehen. Das Mittelteil 1 ist zweckmäßigerweise laserlichtundurchlässig pigmentiert, z. B. durch Ruß.

An dem Mittelteil 1 ist zweckmäßig ein oder zwei Befestigungsflansche 6 angespritzt, an denen der Ölbehälter beispielsweise in einem Automatgetriebe befestigt werden kann. Erfolgt dies beispielsweise durch Schrauben, und werden mit diesen Schrauben weitere Bauteile des Getriebes gehalten, kann es zweckmäßig sein, in die Befestigungsflansche 6 metallene Buchsen 7 mit einzuspritzen, um ein unzulässiges Setzen der Schraubverbindung durch die Relaxation des Kunststoffmaterials zu vermeiden.

Der beschriebene Ölbehälter wird dadurch hergestellt, daß die beiden Deckel 2 und 3 auf den Rand des Mittelteils 1 aufgesetzt werden und ein gewisser Anpreßdruck aufgebracht wird, um einen sicheren Kontakt der Deckel 2 und 3 mit dem Mittelteil 1 sicherzustellen. Nachfolgend wird durch die unpigmentierten Deckel 2 und 3 mittels eines Laserstrahls der Randbereich des Mittelteils 1 erhitzt und aufgeschmolzen und der Schmelze so viel Energie zugeführt, daß durch den Kontakt der Deckel mit der Schmelze die Deckel im Bereich der Nut ebenfalls aufgeschmolzen werden, und die aufgeschmolzenen Randbereiche von Deckel 2 und 3 und Mittelteil 1 sich zur Ausbildung einer fugenlosen Schweißnaht verbinden.

Die Schweißnaht ist mit äußerst geringen Ausschußquoten dicht gegenüber Flüssigkeiten, und bei dem Schweißvorgang entsteht kein Abtrieb oder Schweißaustrieb, der als Verunreinigung des Ölbehälters durch Reinigen beseitigt werden müßte. Dies ist insbesondere ein großer Vorteil dadurch, daß der Ölbehälter im wesentlichen geschlossen ist und bei Verwendung eines anderen Schweißverfahrens nur mit großem Aufwand und erheblichen Rückständen von Abrieb zu reinigen wäre.

Durch das erfindungsgemäße Schweißverfahren kann auch eine komplizierte Kontur des Gehäuses einfach und sicher und ohne die Notwendigkeit einer Nachbehandlung verschweißt werden, wobei das Verfahren nicht auf die Herstellung einer ebenen Schweißnaht beschränkt ist, wie das bei dem vorliegenden Ausführungsbeispiel aus anderen Gründen vorgenommen wurde.

Der so hergestellte Ölbehälter ist gegen die üblicherweise verwendeten Mineralöle sowie möglicherweise in Motorenöl als Rückstände vorhandenes Benzin oder Dieselkraftstoff beständig. Aufgrund des hohen Glasfaseranteils des Mittelteils 1 und der zusätzlichen Mineralfüllung weist der erfindungsgemäße Ölbehälter auch eine große Formbeständigkeit bei erhöhten Temperaturen auf.

Der in den Figuren dargestellte beispielsweise Ölbehälter soll in einem Automatgetriebe während des Betriebs einen Teil des Ölvolumens aufnehmen, um ein Ansteigen des Ölspiegels in der Ölwanne durch thermische Ausdehnung soweit zu vermeiden, daß Zahnräder des Getriebes nicht in den Ölsumpf eintauchen und zu einer unerwünschten und die Betriebssicherheit gefährdenden Schaumbildung führt. Dazu kann der Ölbehälter an beliebiger Stelle im Getriebe angeordnet werden, vorzugsweise oberhalb des Ölspiegels des Ölsumpfes und unter Ausnutzung von vorhandenen Bauraumecken.

Besonders zweckmäßig ist es, wenn der Ölbehälter im Abtropfbereich von Schmierstellen oder dem Rücklauf des vorzugsweise thermostatisch zugeschalteten Ölkühlers liegt. Dazu tritt das ATF-Öl durch eine als Schlitz 8 ausgebildete Einlauföffnung in den Behälter ein, wobei natürlich auch mehrere Einlauföffnungen vorgesehen werden können. Als zweckmäßiger Querschnitt für den Schlitz 8 hat sich eine Fläche von wenigstens 170 mm² bewährt, um ein ausreichend zügiges Füllen des Behälters sicherzustellen und andererseits zu vermeiden, daß ein Teil des in dem Behälter befindlichen Ölvolumens durch die Bewegungen des Kraftfahrzeuges aus dem Behälter herausspritzt oder - schwappt. Um eine ausreichend zügige Füllung des Ölbehälters sicherzustellen, ist um den Schlitz 8 herum eine Auffangmulde 5 vorgesehen, die nach Art eines Trichters das auf die Oberseite 9 des Ölbehälters auftreffende Öl sammeln kann. Dabei ist die Auffangmulde 5 durch zwei zu dem Schlitz 8 hin geneigte Rampen 10 gebildet und zu den Seiten durch einen Befestigungsflansch 6 sowie den überstehenden Abschnitt 4 des großen Gehäusedeckels 2 abgeschlossen. Als geeignete Dimensionierungen hatten sich dabei herausgestellt, daß die Auffangmulde 5 zweckmäßig etwa 10 % breiter ist als der Schlitz 8, z. B. etwa 55 mm. Auch bei Überstehen der Rampen 10 über den Schlitz 8 um etwa 4,3 mm hat es sich als ausreichend erwiesen, wenn die Mulde im Bereich des Schlitzes etwa 1,6 mm tief ist.

Um die Funktion als dynamischen Zwischenspeicher zutreffend zu erfüllen ist es zweckmäßig, wenn eine auf der Unterseite 11 des Ölbehälters angeordnete Ablauföffnung 12 einen Querschnitt aufweist, der nicht mehr als ein Zehntel des Querschnittes der Einlauföffnung beträgt, zweckmäßig nicht mehr als 3 mm². Je nach Einbaulage des Ölbehälters kann die Ablauföffnung 12 auch durch mehrere Ablauföffnungen gesetzt sein.

Bei Experimenten hat es sich als besonders zweckmäßig herausgestellt, wenn die Dimensionierung so erfolgt, daß eine vollständige Füllung des Ölbehälters mit Wasser innerhalb von etwa wenigstens 210 Sekunden, vorzugsweise nicht mehr als 240 Sekunden, insbesondere von etwa 220 bis 230 Sekunden, beispielsweise etwa 226 Sekunden, aus dem Ölbehälter austritt, wenn sich dieser in seiner Betriebslage befindet.

Je nach Anwendungsbereich des Ölbehälters, der in der Regel zur Aufnahme eines Überschußvolumens durch thermische Ausdehnung des Öls dienen soll, kann es je nach Anordnung des Ölbehälters im Getriebe auch zweckmäßig sein, beispielsweise einen in den Zeichnungen nicht dargestellten Bimetallverschluß an der Einlauföffnung vorzusehen, der sicherstellt, daß die Einlauföffnung erst ab einer bestimmten Öltemperatur durch entsprechende Verbiegung des Bimetallstreifens freigegeben wird, damit erst dann Volumen in den Ölbehälter einläuft. Dazu wäre ein solcher Bimetallverschluß zweckmäßig innerhalb der Auffangmulde angeordnet, die insbesondere für eine solche Anwendung zweckmäßig etwas tiefer ausgestaltet wird, so daß der Bimetallverschluß stets von herabtropfendem oder vorbeiströmendem Öl benetzt wird und entsprechend der tatsächlichen Öltemperatur die Einlauföffnung freigibt.

Wird der Motor oder das Getriebe, in das ein erfindungsgemäßer Ölbehälter eingebaut ist, abgeschaltet, tritt das in dem Behälter befindliche Ölvolumen durch die Ablauföffnung 12 langsam aus und gelangt zurück in die Ölwanne, so daß nach Abkühlung des Aggregats und entsprechender Volumenverminderung ein ausreichend hoher Ölstand in der Ölwanne vorhanden ist, damit bei Inbetriebsetzung des Aggregats ein ausreichend tiefes Eintauchen des Ansaugstutzens einer oder mehrerer Ölpumpen, und damit ein rascher Aufbau des erforderlichen Öldrucks, gewährleistet ist.

## Patentansprüche

1. Ölbehälter zur Aufnahme und Abgabe eines Ölvolumens mit einem Speicherraum zur Aufnahme eines Ölvolumens, wenigstens einer Einlauföffnung (8) und wenigstens einer Ablauföffnung (12),
**dadurch gekennzeichnet, dass**
die wenigstens eine Einlauföffnung (8) und wenigstens eine Ablauföffnung (12) so gestaltet sind, dass abtropfendes Öl und/oder Öl, welches eine bestimmte Temperatur überschreitet, ohne Unterbrechung selbständig in den Ölbehälter eintreten und aus dem Ölbehälter austreten kann, wobei die Einlauföffnung (8) durch mindestens einen Schlitz gebildet ist, und die Einlauföffnung (8) in einer Betriebsanlage des Ölbehälters von einer Auffangmulde (5) umgeben ist, welche in wenigstens zwei Richtungen von Rampen (10) begrenzt ist, wobei die wenigstens eine Einlauföffnung (8) und die wenigstens eine Ablauföffnung (12) derart ausgebildet sind, dass der Volumenstrom, der durch die wenigstens eine Einlauföffnung (8) in den Ölbehälter eintreten kann, stets größer ist als der Volumenstrom, der durch die wenigstens eine Ablauföffnung (12) austreten kann, wobei der Ölbehälter mehrteilig unter Verwendung wenigstens von zwei Kunststoffgehäuseteilen (1, 2, 3) gebildet ist, von denen wenigstens zwei Kunststoffgehäuseteile untereinander durch Laserschweißen verbunden sind.

2. Ölbehälter nach Anspruch 1,
**dadurch gekennzeichnet, dass**
wenigstens eines der Kunststoffgehäuseteile (1, 2, 3) aus einem unpigmentierten glasfaserverstärkten Polyamid hergestellt ist.

3. Ölbehälter nach einem der vorhergehenden Ansprüche,
**dadurch gekennzeichnet, dass**
wenigstens eines der Kunststoffgehäuseteile (1, 2, 3) aus einem insbesondere mit Russ pigmentierten glasfaserverstärkten Polyamid hergestellt ist.

4. Ölbehälter nach einem der vorhergehenden Ansprüche,
**dadurch gekennzeichnet, dass**
wenigstens eines der Kunststoffgehäuseteile (1, 2, 3) einen Glasfaseranteil von wenigstens etwa 10 Gew.-% aufweist.

5. Ölbehälter nach Anspruch 4,
**dadurch gekennzeichnet, dass**
der Glasfaseranteil eines weiteren Kunststoffgehäuseteils (1, 2, 3) wenigstens etwa 20 Gew.%, vorzugsweise etwa 30 Gew.%, beträgt.

6. Ölbehälter nach einem der vorhergehenden Ansprüche,
**dadurch gekennzeichnet, dass**
wenigstens zwei der Kunststoffgehäuseteile (1, 2, 3) einen unterschiedlichen Gehalt an Verstärkungsfasern aufweisen.

7. Ölbehälter nach einem der vorhergehenden Ansprüche,
**dadurch gekennzeichnet, dass**
wenigstens eines der Kunststoffgehäuseteile (1, 2, 3) ferner einen Anteil an Mineralfüllung von wenigstens etwa 15 Gew.-%, vorzugsweise etwa 20 Gew.-%, aufweist.

8. Ölbehälter nach einem der vorhergehenden Ansprüche,
**dadurch gekennzeichnet, dass**
das Aufnahmevolumen wenigstens etwa 300 ml beträgt.

9. Ölbehälter nach Anspruch 8,
**dadurch gekennzeichnet, dass**
das Aufnahmevolumen wenigstens etwa 330 ml beträgt.

10. Ölbehälter nach einem der vorhergehenden Ansprüche,
**dadurch gekennzeichnet, dass**
eine vollständige Füllung des Ölbehälters mit Wasser innerhalb einer Zeit von etwa wenigstens 210 Sekunden, vorzugsweise nicht mehr als 240 Sekunden, insbesondere von etwa 220 bis 230 Sekunden, aus dem Ölbehälter in seiner Betriebslage austritt.

11. Ölbehälter nach einem der vorhergehenden Ansprüche,
**dadurch gekennzeichnet, dass**
die Auffangmulde (5) wenigstens etwa 1,6 mm tief ist und in wenigstens zwei Richtungen von Rampen (10) begrenzt ist, deren obere Ränder etwa 4, 3 mm über der Einlauföffnung (8) liegen.

12. Ölbehälter nach Anspruch 11,
**dadurch gekennzeichnet, dass**
die Auffangmulde (5) wenigstens etwa 55 mm breit ist.

13. Ölbehälter nach einem der Ansprüche 11 oder 12,
**dadurch gekennzeichnet, dass**
die Auffangmulde (5) wenigstens etwa 10% breiter ist, als die zumindest eine Einlauföffnung (8).

14. Ölbehälter nach einem der vorhergehenden Ansprüche,
**dadurch gekennzeichnet, dass**
der Querschnitt der wenigstens einen Einlauföffnung (8) zumindest 170 mm² beträgt.

15. Ölbehälter nach einem der vorhergehenden Ansprüche,
**dadurch gekennzeichnet, dass**
der Querschnitt der Ablauföffnungen (1 2) zusammen nicht mehr als 3 mm² betragen.

16. Ölbehälter nach einem der vorhergehenden Ansprüche,
**dadurch gekennzeichnet, dass**
das Verhältnis der Querschnitte von Ablauföffnungen (12) und Einlauföffnungen (8) wenigstens 1:10 beträgt.

17. Ölbehälter nach einem der vorhergehenden Ansprüche,
**dadurch gekennzeichnet, dass**
die wenigstens eine Einlauföffnung (8) durch einen Bimetallverschluss abgedeckt ist, der die Einlauföffnung (8) bei Überschreiten einer vorbestimmten Temperatur freigibt.

18. Ölbehälter nach Anspruch 11 und 17,
**dadurch gekennzeichnet, dass**
der Bimetallverschluss innerhalb der Auffangmulde (5) angeordnet ist.

19. Ölbehälter nach einem der vorhergehenden Ansprüche,
**dadurch gekennzeichnet, dass**
der Ölbehälter mehrteilig unter Verwendung wenigstens von drei Kunststoffgehäuseteilen (1, 2, 3) gebildet ist, die untereinander durch Laserschweißen verbunden sind, und von denen wenigstens zwei unpigmentiert oder laserlichtdurchlässig eingefärbt sind.

20. Verfahren zur Herstellung eines mehrteiligen Ölbehälters gemäß einem der Ansprüche 1 bis 19, unter Verwendung von wenigstens zwei Kunststoffgehäuseteilen, wobei wenigstens ein Kunststoffgehäuseteil aus einem unpigmentierten oder laserlichtdurchlässig eingefärbten faserverstärkten Thermoplast, vorzugsweise durch Spritzgießen, gebildet ist, und wenigstens ein weiteres Kunststoffgehäuseteil aus einem mit Russ pigmentierten oder laserlichtundurchlässig eingefärbten faserverstärkten Kunststoff, vorzugsweise durch Spritzgießen, gebildet ist, wobei die wenigstens zwei Kunststoffgehäuseteile entlang ihrer Verbindungsfläche mit Druck zusammengefügt und der Trennbereich der wenigstens zwei Kunststoffgehäuseteile mit einem Laser bestrahlt werden, so dass der Randbereich des mit Russ pigmentierten oder laserlichtundurchlässig eingefärbten Kunststoffgehäuseteils aufschmilzt und der Schmelze ausreichend Energie zugeführt wird, dass durch den Kontakt mit der Schmelze deren Bereich des unpigmentierten oder laserlichtdurchlässig eingefärbten Kunststoffgehäuseteils aufgeschmolzen wird und die aufgeschmolzenen Randbereiche sich zur Ausbildung einer fugenlosen Schweißnaht verbinden.

## Claims

1. An oil tank for receiving and discharging an oil volume, comprising a storage space for receiving an oil volume, at least one inlet opening (8) and at least one discharge opening (12), **characterized in that** the at least one inlet opening (8) and at least one discharge opening (12) are arranged in such a way that dripping oil and/or oil which exceeds a certain temperature can enter the oil tank automatically without any interruption and can discharge from the oil tank, with the inlet opening (8) being formed by at least one slit and the inlet opening (8) being enclosed in an operating system of the oil tank by a collecting trough (5) which is delimited in at least two directions by ramps (10), with the at least one inlet opening (8) and the at least one discharge opening (12) being arranged in such a way that the volume flow which can enter the oil tank through the at least one inlet opening (8) is always larger than the volume flow which can exit through the at least one discharge opening (12), with the oil tank being formed in several parts by using at least two plastic housing parts (1, 2, 3), of which at least two plastic housing parts are connected among each other by laser welding.

2. An oil tank according to claim 1, **characterized in that** at least one of the plastic housing parts (1, 2, 3) is made from a non-pigmented glass-fiber reinforced polyamide.

3. An oil tank according to one of the preceding claims, **characterized in that** at least one of the plastic housing parts (1, 2, 3) is made from a glass-fiber reinforced polyamide pigmented especially with soot.

4. An oil tank according to one of the preceding claims, **characterized in that** at least one of the plastic housing parts (1, 2, 3) has a glass fiber percentage of less than approximately 10% by weight.

5. An oil tank according to claim 4, **characterized in that** the glass fiber percentage of a further plastic housing part (1, 2, 3) is at least approximately 20% by weight, preferably approximately 30% by weight.

6. An oil tank according to one of the preceding claims, **characterized in that** at least two of the plastic housing parts (1, 2, 3) have a different content of reinforcing fibers.

7. An oil tank according to one of the preceding claims, **characterized in that** at least one of the plastic housing parts (1, 2, 3) further has a percentage of mineral filling of at least 15% by weight, preferably approximately 20% by weight.

8. An oil tank according to one of the preceding claims, **characterized in that** the receiving volume is at least approximately 300 ml.

9. An oil tank according to claim 8, **characterized in that** the receiving volume is at least approximately 330 ml.

10. An oil tank according to one of the preceding claims, **characterized in that** a complete filling of the oil tank with water exits from the oil tank in its operating position within a period of approximately at least 210 seconds, preferably not more than 240 seconds, especially approximately 220 to 230 seconds.

11. An oil tank according to one of the preceding claims, **characterized in that** the collecting trough (5) is at least approximately 1.6 mm deep and is delimited in at least two directions by ramps (10) whose upper edges are situated approximately 4.3 mm above the inlet opening (8).

12. An oil tank according to claim 11, **characterized in that** the collecting trough (5) is at least approximately 55 mm wide.

13. An oil tank according to one of the claims 11 or 12, **characterized in that** the collecting trough (5) is at least approximately 10% wider than the at least one inlet opening (8).

14. An oil tank according to one of the preceding claims, **characterized in that** the cross section of the at least one inlet opening (8) is at least 170 mm².

15. An oil tank according to one of the preceding claims, **characterized in that** the cross section of the discharge openings (12) is together not more than 3 mm².

16. An oil tank according to one of the preceding claims, **characterized in that** the ratio of the cross sections of discharge openings (12) and inlet openings (8) is at least 1:10.

17. An oil tank according to one of the preceding claims, **characterized in that** the at least one inlet opening (8) is covered by a bimetal seal which releases the inlet opening (8) upon exceeding a predetermined temperature.

18. An oil tank according to claim 11 and 17, **characterized in that** the bimetal seal is arranged within the collecting trough (5).

19. An oil tank according to one of the preceding claims, **characterized in that** the oil tank is formed by using at least three plastic housing parts (1, 2, 3) which are joined among each other by laser welding and of which at least two are non-pigmented or dyed to be transparent for laser light.

20. A method for producing a multi-part oil tank according to one of the claims 1 to 19, by using at least two plastic housing parts, with at least one plastic housing part being formed by a non-pigmented or laser-light-transparent dyed fiber-reinforced thermoplastic material, preferably by injection molding, and at least one further plastic housing part made of a fiber-reinforced plastic material which is pigmented with soot or dyed to be impermeable for laser light, preferably by injection molding, with the at least two plastic housing parts being joined along their connecting surface with pressure and the separating area of the at least two plastic housing parts being irradiated with a laser, so that the boundary region of the plastic housing part which is pigmented with soot or dyed to be impermeable for laser light will melt down and the melt is supplied with sufficient energy that as a result of the contact with the melt its region of the plastic housing part which is non-pigmented or dyed to be transparent for laser light is molten down and the molten boundary regions will join to form a seamless weld line.

## Revendications

1. Réservoir d'huile destiné à recevoir et distribuer un volume d'huile avec un espace d'accumulation pour recevoir un volume d'huile, au moins une ouverture d'entrée (8) et au moins une ouverture d'évacuation (12),
**caractérisé en ce que** l'au moins une ouverture d'entrée (8) et l'au moins une ouverture d'évacuation (12) sont conformées de telle sorte que l'huile qui s'égoutte et/ou l'huile dépassant une certaine température peuvent entrer d'elles-mêmes dans le réservoir d'huile et sortir du réservoir d'huile sans interruption, l'ouverture d'entrée (8) étant formée par au moins une fente, et l'ouverture d'entrée (8) étant entourée, dans une position de fonctionnement du réservoir d'huile, par une cuvette de collecte (5) qui est délimitée dans au moins deux directions par des rampes (10), l'au moins une ouverture d'entrée (8) et l'au moins une ouverture d'évacuation (12) étant conformées de telle sorte que le débit en volume qui peut entrer à travers l'au moins une ouverture d'entrée (8) dans le réservoir d'huile soit toujours plus grand que le débit en volume qui peut sortir à travers l'au moins une ouverture d'évacuation (12), le réservoir d'huile étant formé de plusieurs parties en utilisant au moins deux parties de boîtier en plastique (1, 2, 3) dont au moins deux sont assemblées entre elles par soudage laser.

2. Réservoir d'huile selon la revendication 1, **caractérisé en ce que** l'une au moins des parties de boîtier en plastique (1, 2, 3) est faite d'un polyamide armé de fibres de verre et non pigmenté.

3. Réservoir d'huile selon l'une des revendications précédentes, **caractérisé en ce que** l'une au moins des parties de boîtier en plastique (1, 2, 3) est faite d'un polyamide armé de fibres de verre et pigmenté, en particulier avec de la suie.

4. Réservoir d'huile selon l'une des revendications précédentes, **caractérisé en ce que** l'une au moins des parties de boîtier en plastique (1, 2, 3) comporte une proportion de fibres de verre d'au moins 10 % en poids environ.

5. Réservoir d'huile selon la revendication 4, **caractérisé en ce que** la proportion de fibres de verre d'une autre partie de boîtier en plastique (1, 2, 3) est d'au moins 20 % en poids environ, de préférence 30 % en poids environ.

6. Réservoir d'huile selon l'une des revendications précédentes, **caractérisé en ce qu'**au moins deux des parties de boîtier en plastique (1, 2, 3) présentent une proportion différente de fibres de renfort.

7. Réservoir d'huile selon l'une des revendications précédentes, **caractérisé en ce que** l'une au moins des parties de boîtier en plastique (1, 2, 3) comprend en outre une proportion de charge minérale d'au moins 15 % en poids environ, de préférence 20 % en poids environ.

8. Réservoir d'huile selon l'une des revendications précédentes, **caractérisé en ce que** la capacité en volume est d'au moins 300 ml environ.

9. Réservoir d'huile selon la revendication 8, **caractérisé en ce que** la capacité en volume est d'au moins 330 ml environ.

10. Réservoir d'huile selon l'une des revendications précédentes, **caractérisé en ce qu'**un remplissage complet du réservoir d'huile avec de l'eau sort du réservoir d'huile dans sa position de fonctionnement dans un délai d'environ 210 secondes au moins, de préférence pas plus de 240 secondes, en particulier d'environ 220 à 230 secondes.

11. Réservoir d'huile selon l'une des revendications précédentes, **caractérisé en ce que** la cuvette de collecte (5) est profonde d'au moins 1,6 mm environ et délimitée dans au moins deux directions par des rampes (10) dont les bords supérieurs se situent à 4,3 mm environ au-dessus de l'ouverture d'entrée (8).

12. Réservoir d'huile selon la revendication 11, **caractérisé en ce que** la cuvette de collecte (5) est large d'au moins 55 mm environ.

13. Réservoir d'huile selon l'une des revendications 11 ou 12, **caractérisé en ce que** la cuvette de collecte (5) est plus large d'environ 10 % que l'au moins une ouverture d'entrée (8).

14. Réservoir d'huile selon l'une des revendications précédentes, **caractérisé en ce que** la section de l'au moins une ouverture d'entrée (8) mesure au moins 170 mm².

15. Réservoir d'huile selon l'une des revendications précédentes, **caractérisé en ce que** la section des ouvertures d'évacuation (12) réunies ne mesure pas plus de 3 mm².

16. Réservoir d'huile selon l'une des revendications précédentes, **caractérisé en ce que** le rapport des sections des ouvertures d'évacuation (12) et des ouvertures d'entrée (8) est d'au moins 1 pour 10.

17. Réservoir d'huile selon l'une des revendications précédentes, **caractérisé en ce que** l'au moins une ouverture d'entrée (8) est couverte par une fermeture à bilame qui dégage l'ouverture d'entrée (8) lorsqu'une température prédéterminée est dépassée.

18. Réservoir d'huile selon les revendications 11 et 17, **caractérisé en ce que** la fermeture à bilame est disposée à l'intérieur de la cuvette de collecte (5).

19. Réservoir d'huile selon l'une des revendications précédentes, **caractérisé en ce que** le réservoir d'huile est formé de plusieurs parties en utilisant au moins trois parties de boîtier en plastique (1, 2, 3) assemblées entre elles par soudage laser, et dont au moins deux ne sont pas pigmentées ou sont teintées de façon à laisser passer la lumière laser.

20. Procédé pour la fabrication d'un réservoir d'huile en plusieurs parties selon l'une des revendications 1 à 19, en utilisant au moins deux parties de boîtier en plastique, une partie de boîtier en plastique au moins étant faite d'un thermoplastique non pigmenté ou teinté de façon à laisser passer la lumière laser, et au moins une autre partie de boîtier en plastique étant faite d'un plastique armé de fibres et pigmenté avec de la suie ou teinté de façon à ne pas laisser passer la lumière laser, de préférence par moulage par injection, les au moins deux parties de boîtier en plastique étant réunies sous pression le long de leur surface d'assemblage et la zone de séparation des au moins deux parties de boîtier en plastique étant exposée à un laser de telle sorte que la zone de bord de la partie de boîtier en plastique pigmentée avec de la suie ou teintée de façon à ne pas laisser passer la lumière laser fonde et que la matière fondue reçoive suffisamment d'énergie pour que le contact avec la matière fondue fasse fondre sa zone de la partie de boîtier en plastique non pigmentée ou teintée de façon à laisser passer la lumière laser et que les zones de bord fondues se réunissent pour former une soudure sans joint.
